# EUROPEAN PATENT SPECIFICATION

(11) **EP 3 852 899 B1**
(45) Date of publication and mention of the grant of the patent: **30.07.2025**
(21) Application number: 19779362.3
(22) Date of filing: 19.09.2019
(51) Int. Cl.: B01D 29/11, B01D 35/26, B01D 35/30

(54) **FLUID FILTER AND PRIMING PUMP ASSEMBLY AND METHODS**
FLUIDFILTER UND ANSAUGPUMPENANORDNUNG UND VERFAHREN
ENSEMBLE FILTRE À FLUIDE ET POMPE D'AMORÇAGE ET PROCÉDÉS ASSOCIÉS

(30) Priority: 21.09.2018 US 201816137703
(43) Date of publication of application: 28.07.2021
(73) Proprietor: Perkins Engines Company Limited, Cambridgeshire PE1 5FQ (GB)
(72) Inventor: BATCHELOR, James, K., Peterborough PE6 7YB (GB); DARLEY, James, A., Peterborough PE6 9BB (GB)
(74) Representative: Novagraaf Group
(86) International application number: PCT/EP2019/025310
(87) International publication number: WO 2020/057780

(56) References cited:
- WO-A1-2015/031767
- WO-A1-2016/168547
- US-A1- 2016 082 368

## Description

### Technical Field

This disclosure relates to fluid filters and priming pumps, such as fuel filters and priming pumps for engines, for example.

### Background

In the field of engines, such as engines for heavy construction vehicles, for example, a fluid filter is typically used to clean the fuel before the fuel is injected into the engine for combustion. A priming pump is generally connected to the fluid filter and operated to move the fuel through the fluid filter. For example, U.S. Patent Application Publication No. US 2016/0082368 describes a filter element and filter assembly for separating fluids having a canister configured to be coupled to a filter base. The filter base includes a mounting bracket having at least one hole for receiving a fastener for coupling the filter base to a machine. A challenge with existing fluid filter and priming pump configurations is that the fluid filter is configured to mount in only one orientation, the priming pump requires its own separate mounting system, and the orientations of the inlet(s) and outlet(s) of the priming pump are fixed. As a result, to have any flexibility concerning the orientation of the inlet(s) and outlet(s) in an installed condition, the priming pump must have multiple inlets and outlets to accommodate fluid inlet and outlet lines (fluid conduits) that may need to be connected on either of two opposite sides of the priming pump, depending on the particular mounting situation.

WO 2016/168547 A1 discloses a fluid delivery system comprising a pump assembly. The pump assembly includes a fuel filter housing, a reservoir and several inlets which are required for fluid communication during operation of the pump assembly.

### Summary

According to a first aspect, a fluid filter and priming pump assembly may include a fluid filter housing and a filter base attached to the fluid filter housing, the filter base including a priming pump configured to move fluid through the fluid filter housing. The filter base may include a first inlet oriented in a first direction, a second inlet oriented in a second direction different from the first direction, at least one of the first inlet and the second inlet being configurable to receive the fluid, an outlet configured to discharge the fluid, a first mount configured for mounting the filter base in a first orientation, and a second mount configured for mounting the filter base in a second orientation different from the first orientation. The filter base is further characterized in that said second direction is opposite said first direction and said second orientation is opposite said first orientation.

According to a second aspect, a filter base may include a first inlet oriented in a first direction; a second inlet oriented in a second direction different from the first direction; at least one of the first inlet and the second inlet being configurable to receive a fluid; an outlet configured to discharge the fluid; a first mount configured for mounting the filter base in a first orientation; a second mount configured for mounting the filter base in a second orientation different from the first orientation, wherein said second direction is opposite said first direction and said second orientation is opposite said first orientation.; and an opening configured for attachment to a fluid filter housing.

According to a third aspect, a method of installing a filter base is disclosed wherein the filter base has a first inlet oriented in a first direction, a second inlet oriented in a second direction different from the first direction, at least one of the first inlet and the second inlet being configurable to receive a fluid, an outlet configured to discharge the fluid, a first mount configured for mounting the filter base to a machine in a first orientation, and a second mount configured for mounting the filter base to a machine in a second orientation different from the first orientation, wherein said second direction is opposite said first direction and said second orientation is opposite said first orientation. The method may include: determining a desired direction for the outlet to be oriented; selecting one of the first and second inlets to serve as an operable inlet based on the desired direction of the outlet; and mounting the filter base to the machine in either the first orientation or the second orientation using either the first mount or the second mount, respectively, such that the outlet is oriented in the desired direction.

### Brief Description of the Drawings

Fig. 1 is a perspective view of a fluid filter and priming pump assembly and a mounting bracket.
Fig. 2 is a front elevational view of the fluid filter and priming pump assembly of Fig. 1.
Fig. 3 is a rear elevational view of the fluid filter and priming pump assembly of Fig. 1.
Fig. 4 is a front perspective view of the filter base of Fig. 1.
Fig. 5 is a rear perspective view of the filter base of Fig. 1.
Fig. 6 is a schematic top plan view of the fluid filter and priming pump assembly of Fig. 1.
Fig. 7 is a schematic rear elevational view of the fluid filter and priming pump assembly of Fig. 1.

### Detailed Description

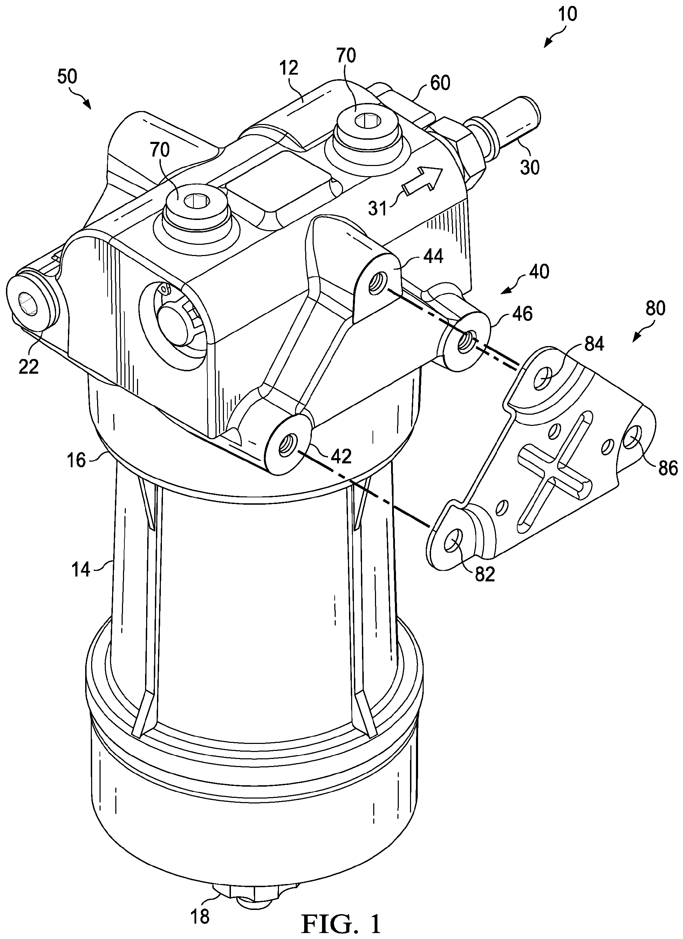

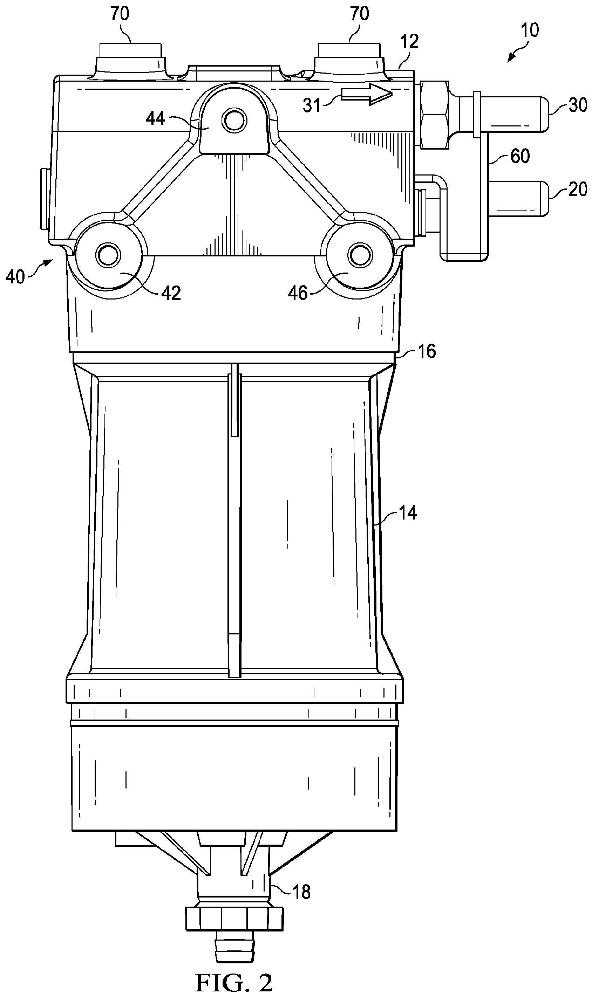

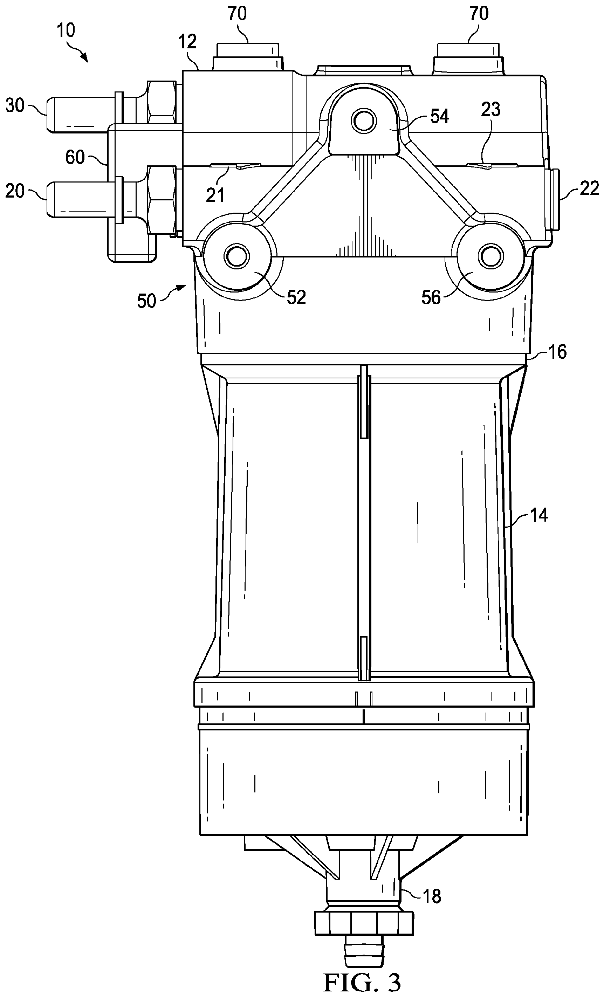

Figures 1-3 illustrate an exemplary embodiment of a fluid filter and priming pump assembly 10. Fluid filter and priming pump assembly 10 may be used to filter fluids such as, for example, fuel, lubricants, coolants, and hydraulic fluid used by machines. Other uses may be contemplated.

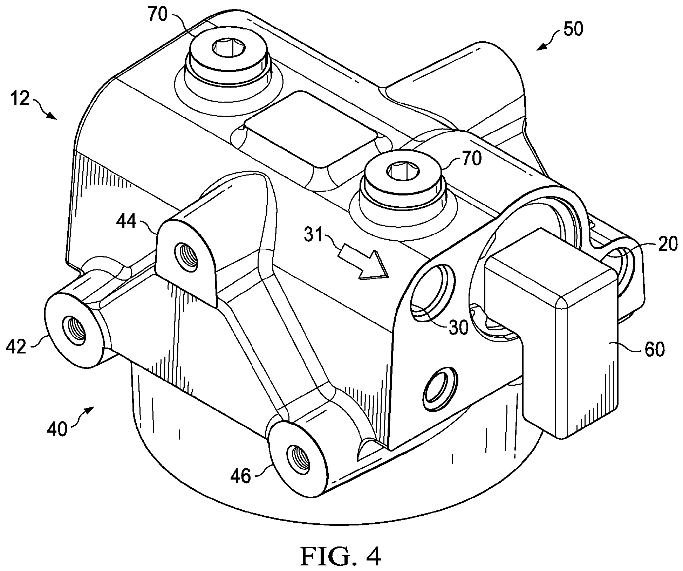

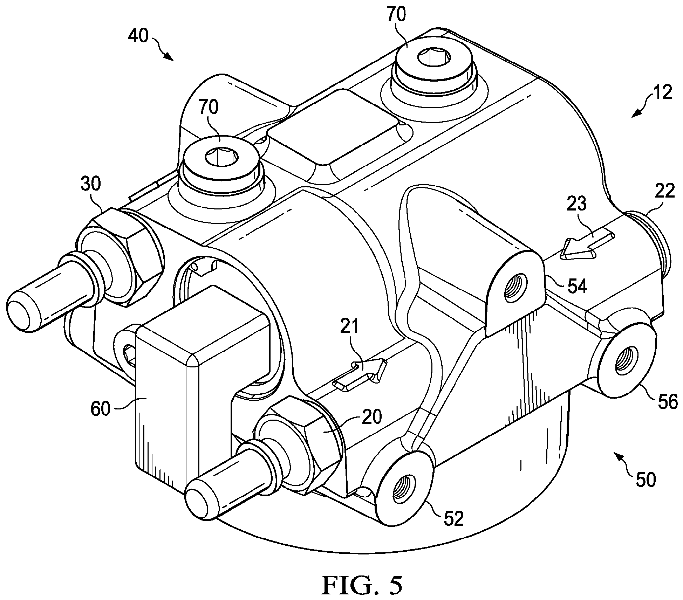

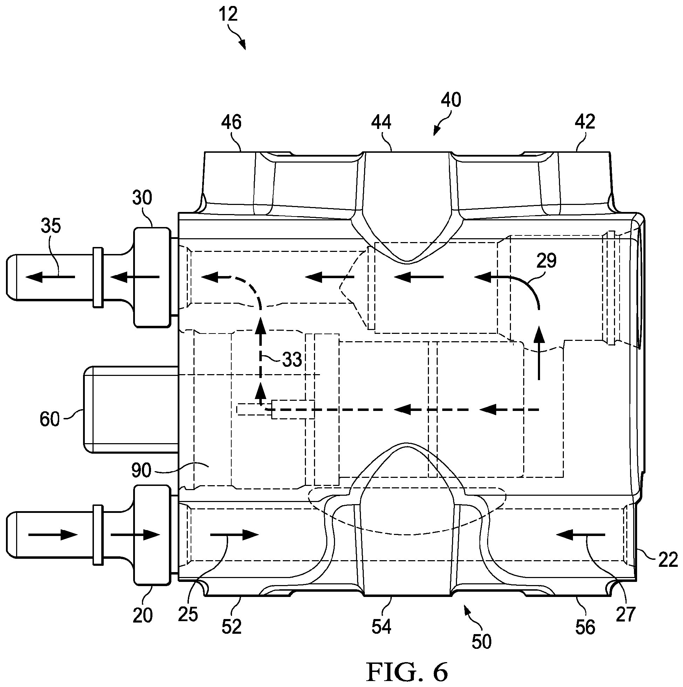

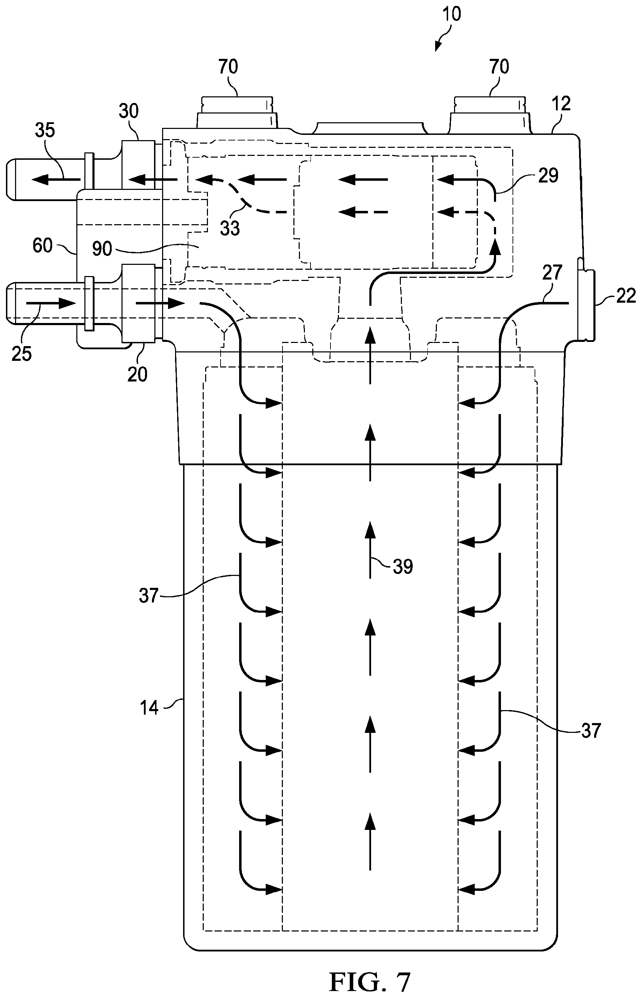

As shown in Figs. 1-3, a fluid filter and priming pump assembly 10 may include a filter base 12 and a fluid filter housing 14 connected to filter base 12 via a connection 16, such as a threaded connection, for example, although any suitable connection may be used. Filter base 12 may have a priming pump 90 (see Figs. 6 and 7) configured to move fluid (such as fuel, for example) through fluid filter housing 14 and filter base 12. Fluid filter housing 14 may have a fluid filter disposed therein to clean fluid that is passed through fluid filter housing 14. In some embodiments, fluid filter housing 14 may include a drain valve 18 that may be closed during normal operation and may be opened to facilitate draining fluid from fluid filter housing 14. As shown in Figs. 4 and 5, filter base 12 may include a first inlet 20 oriented in a first direction on a first side of filter base 12 to receive incoming fluid as shown by arrow 21, a second inlet 22 oriented in a second direction on a second side of filter base 12 to receive incoming fluid as shown by arrow 23, and an outlet 30 configured to discharge fluid as shown by arrow 31. In Fig. 5, each of inlet 20 and outlet 30 is shown with a hose connector, which is not shown in Fig. 4 for clarity. According to the invention, the first direction is opposite the second direction. Persons of ordinary skill in the art will appreciate that the term "opposite" as used herein should be understood to encompass configurations in which the directions or components stated to be opposite one another are not exactly opposite but are approximately so. Similarly, persons of ordinary skill in the art will appreciate that the term "the same" as used herein should be understood to encompass configurations in which the directions or components stated to be the same are not identical but are approximately so. As illustrated, outlet 30 may be oriented in the same direction as the first inlet 20; however, in some embodiments, outlet 30 may be oriented in the same direction as the second inlet 22 or in another suitable orientation. One of the inlets 20, 22 may be open to fluid flow, and the other of the inlets 20, 22 may be closed, depending on which side of filter base 12 the fluid inlet line needs to be connected for the particular installation. In some embodiments, each of the inlets 20, 22 may initially include a closure (e.g., a plug) in the originally manufactured condition that is removable or penetrable by a user (e.g., by drilling or piercing) to open the desired inlet 20 or 22 once the desired operable inlet has been selected for the particular installation. In other embodiments, the desired inlet 20 or 22 may be known at the time of manufacture, and the appropriate inlet 20 or 22 may be opened at the time of manufacture. Although only one outlet 30 is shown, more than one outlet may be provided in some embodiments. For example, another outlet may be oriented in a direction opposite the direction of outlet 30 or another suitable direction. Filter base 12 may also include one or more plugs 70 configured to close one or more unused openings of filter base 12.

Referring again to Figs. 4 and 5, filter base 12 may include a first mount 40 having a plurality of bosses 42, 44, 46 (e.g., internally threaded bosses configured for receiving externally threaded mounting bolts) or other suitable mounting connections configured for mounting fluid filter and priming pump assembly 10 to a machine in a first orientation. Filter base 12 may also include a second mount 50 having a plurality of bosses 52, 54, 56 (e.g., internally threaded bosses configured for receiving externally threaded mounting bolts) or other suitable mounting connections configured for mounting fluid filter and priming pump assembly 10 to a machine in a second orientation different from the first orientation. According to the invention, the second orientation is opposite (e.g., rotated about 180 degrees) from the first orientation.. Mount 40 or mount 50 may be used to mount fluid filter and priming pump assembly 10 to a machine either directly or via a bracket such as bracket 80, for example (see Fig. 1), such that holes 82, 84, 86 of bracket 80 are aligned with corresponding holes of bosses 42, 44, 46 or bosses 52, 54, 56. In either the first orientation or the second orientation, an inlet (either inlet 20 or inlet 22) is available for connection to a fluid inlet line, according to whichever side of fluid filter and priming pump assembly 10 such connection is needed. Thus, a single configuration of fluid filter and priming pump assembly 10 may accommodate machines that have a fluid inlet line approaching from either side of fluid filter and priming pump assembly 10, and fluid filter and priming pump assembly 10 may be installed with a single mount (e.g., mount 40 or mount 50) rather than two separate mounts (one for each of filter base 12 and fluid filter housing 14). From the perspective of the outlet 30, fluid filter and priming pump assembly 10 may be placed in whichever orientation is desired for outlet 30 to connect to the fluid outlet line, and regardless of which orientation is thereby selected, an inlet 20 or 22 will be suitably positioned for connection to the fluid inlet line. Fluid filter and priming pump assembly 10 may thus be reversible for any desired mounting orientation.

As will be appreciated by persons of ordinary skill in the art, a method of installing a filter base 12 configured as described above to a machine may include determining a desired direction for the outlet 30 to be oriented; selecting one of the first and second inlets 20, 22 to serve as an operable inlet based on the desired direction of the outlet 30; and mounting the filter base 12 to the machine in either the first orientation or the second orientation using either the first mount 40 or the second mount 50, respectively, such that the outlet 30 is oriented in the desired direction. The method may also include opening the operable inlet 20 or 22 by removing a plug or penetrating a closure thereof and connecting a fluid filter housing 14 to the filter base 12 to form a fluid filter and priming pump assembly 10 as described herein. In some embodiments, such connecting may include fastening a threaded connection 16 to join fluid filter housing 14 and filter base 12 together. In some embodiments, the method may further include connecting the operable inlet 20 or 22 to a fluid inlet line and connecting the outlet 30 to a fluid outlet line.

In some embodiments, priming pump 90 may be an electric pump, and filter base 12 may include an electrical connector 60 configured for connecting priming pump 90 to an electrical power source. Of course, other types of pumps may be used, such as hydraulic pumps, for example.

As shown in Figs. 6 and 7, fluid may enter filter base 12 at inlet 20 as shown by flowpath 25 and may proceed downward into fluid filter housing 14 as shown by flowpaths 27 and 37. Fluid may then proceed upward through fluid filter housing 14 and back into filter base 12 as shown by flowpath 39. In a first mode of operation in which priming pump 90 is activated, the fluid may pass through priming pump 90 as shown by flowpath 33 and then be discharged from filter base 12 through outlet 30 as shown by flowpath 35. In a second mode of operation in which priming pump 90 is not activated, the fluid may bypass priming pump 90 as shown by flowpath 29 and then be discharged from filter base 12 through outlet 30 as shown by flowpath 35. Of course, other suitable flowpaths may be employed.

In some embodiments, fluid filter housing 14 and filter base 12 may be combined into an integral fluid filter and priming pump assembly 10 as described herein at a location (for example, a pump and filter manufacturing facility) other than the place of installation (for example, a vehicle manufacturing or maintenance facility). In other embodiments, fluid filter housing 14 and filter base 12 may arrive separately at a place of installation. An installer may first assemble fluid filter housing 14 and filter base 12 into a fluid filter and priming pump assembly 10 and then mount the fluid filter and priming pump assembly 10 to a machine using mount 40 or mount 50. Alternatively, in some embodiments, an installer may mount filter base 12 to a machine using mount 40 or mount 50 and then attach fluid filter housing 14 to filter base 12. In some embodiments, a fluid filter and priming pump assembly 10 may be replaced as a unit. In other embodiments, if a used fluid filter housing 14 is worn out and needs to be replaced but the associated filter base 12 is still operable, for example, the used fluid filter housing 14 may be removed from the filter base 12 (which may remain installed), and a fresh fluid filter housing 14 may be attached to the filter base 12.

### Industrial Applicability

The exemplary fluid filter and priming pump assemblies of the present disclosure may be applicable to a variety of fluid systems. For example, the fluid filter and priming pump assemblies may be applicable to power systems, such as, for example, compression-ignition engines, gasoline engines, gaseous-fuel powered engines, and other internal combustion engines. For example, the fluid filter and priming pump assemblies may be used in a fuel system, for example, to separate water from fuel and/or remove particulate matter from fuel prior to being supplied to an engine. Use of the disclosed fluid filter and priming pump assemblies may result in simpler and more flexible installation in a variety of different engine system configurations.

## Claims

1. A fluid filter and priming pump assembly (10) comprising:
a fluid filter housing (14); and
a filter base (12) attached to said fluid filter housing (14) and configured to move fluid through said fluid filter housing (14), said filter base (12) comprising:
a first inlet (20) oriented in a first direction,
a second inlet (22) oriented in a second direction different from said first direction,
at least one of said first inlet (20) and said second inlet (22) being configurable to receive said fluid,
an outlet (30) configured to discharge said fluid, a first mount (40) configured for mounting said filter base (12) in a first orientation, and
a second mount (50) configured for mounting said filter base (12) in a second orientation different from said first orientation
**characterized in that**
said second direction is opposite said first direction and said second orientation is opposite said first orientation.

2. The fluid filter and priming pump assembly (10) of claim 1 further comprising a bracket (80) configured for engagement with either one of said first mount (40) and said second mount (50).

3. The fluid filter and priming pump assembly (10) of claim 1 wherein said first mount (40) and said second mount (50) are the same and are disposed on opposite sides of said filter base (12).

4. The fluid filter and priming pump assembly (10) of claim 1 wherein at least one of said first mount (40) and said second mount (50) comprises a plurality of internally threaded bosses (42, 44, 46 or 52, 54, 56) configured for receiving a respective plurality of externally threaded mounting bolts.

5. A filter base (12) comprising:
a first inlet (20) oriented in a first direction;
a second inlet (22) oriented in a second direction different from said first direction;
at least one of said first inlet (20) and said second inlet (22) being configurable to receive a fluid;
an outlet (30) configured to discharge said fluid;
a first mount (40) configured for mounting said filter base (12) in a first orientation;
a second mount (50) configured for mounting said filter base (12) in a second orientation different from said first orientation; and
an opening configured for attachment to a fluid filter housing (14)
**characterized in that**
said second direction is opposite said first direction and said second orientation is opposite said first orientation.

6. The filter base (12) of claim 5
wherein said first mount (40) and said second mount (50) are the same and are disposed on opposite sides of said filter base (12).

7. The filter base (12) of claim 5 wherein each of said first mount (40) and said second mount (50) is the same and comprises a triad of internally threaded bosses (42, 44, 46 and 52, 54, 56) configured for receiving a respective triad of externally threaded mounting bolts.

8. A method of installing a filter base (12) having a first inlet (20) oriented in a first direction, a second inlet (22) oriented in a second direction different from said first direction, at least one of said first inlet (20) and said second inlet (22) being configurable to receive a fluid, an outlet (30) configured to discharge said fluid, a first mount (40) configured for mounting said filter base (12) to a machine in a first orientation, and a second mount (50) configured for mounting said filter base (12) to a machine in a second orientation different from said first orientation, wherein said second direction is opposite said first direction and said second orientation is opposite said first orientation, the method comprising:
determining a desired direction for said outlet (30) to be oriented; selecting one of said first inlet (20) and said second inlet (22) to serve as an operable inlet based on said desired direction of said outlet (30); and mounting said filter base (12) to the machine in either said first orientation or said second orientation using either said first mount (40) or said second mount (50), respectively, such that said outlet (30) is oriented in said desired direction.

9. The method of claim 8 further comprising: opening said operable inlet (20 or 22) by removing or penetrating a closure thereof.

10. The method of claim 8 further comprising: connecting a fluid filter housing (14) to said filter base (12).

11. The method of claim 8 further comprising: connecting said operable inlet (20 or 22) to a fluid inlet line; and connecting said outlet (30) to a fluid outlet line.

## Patentansprüche

1. Flüssigkeitsfilter- und Ansaugpumpenanordnung (10), umfassend: ein Flüssigkeitsfiltergehäuse (14); und
eine Filterbasis (12), die an dem Flüssigkeitsfiltergehäuse (14) angebracht ist und konfiguriert ist, um Flüssigkeit durch das Flüssigkeitsfiltergehäuse (14) zu bewegen, die Filterbasis (12) umfassend:
einen ersten Einlass (20), der in eine erste Richtung ausgerichtet ist,
einen zweiten Einlass (22), der in eine zweite Richtung ausgerichtet ist, die sich von der ersten Richtung unterscheidet,
wobei mindestens einer des ersten Einlasses (20) und des zweiten Einlasses (22) konfiguriert werden kann, um die Flüssigkeit aufzunehmen,
einen Auslass (30), der konfiguriert ist, um die Flüssigkeit abzulassen, eine erste Befestigung (40), die zum Befestigen der Filterbasis (12) in einer ersten Ausrichtung konfiguriert ist, und
eine zweite Befestigung (50), die zum Befestigen der Filterbasis (12) in einer zweiten Ausrichtung konfiguriert ist, die sich von der ersten Ausrichtung unterscheidet
**dadurch gekennzeichnet, dass**
die zweite Richtung zu der ersten Richtung entgegengesetzt ist und die zweite Ausrichtung zu der ersten Ausrichtung entgegengesetzt ist.

2. Flüssigkeitsfilter- und Ansaugpumpenanordnung (10) nach Anspruch 1, ferner umfassend eine Halterung (80), die zum Eingriff mit einer der ersten Befestigung (40) oder der zweiten Befestigung (50) konfiguriert ist.

3. Flüssigkeitsfilter- und Ansaugpumpenanordnung (10) nach Anspruch 1, wobei die erste Befestigung (40) und die zweite Befestigung (50) gleich sind und auf entgegengesetzten Seiten der Filterbasis (12) eingerichtet sind.

4. Flüssigkeitsfilter- und Ansaugpumpenanordnung (10) nach Anspruch 1,
wobei mindestens eine der ersten Befestigung (40) und der zweiten Befestigung (50) eine Vielzahl von mit Innengewinden versehenen Vorsprüngen (42, 44, 46 oder 52, 54, 56) umfasst, die zum Aufnehmen einer jeweiligen Vielzahl von mit Außengewinden versehenen Befestigungsschrauben konfiguriert sind.

5. Filterbasis (12), umfassend:
einen ersten Einlass (20), der in eine erste Richtung ausgerichtet ist;
einen zweiten Einlass (22), der in eine zweite Richtung ausgerichtet ist, die sich von der ersten Richtung unterscheidet;
wobei mindestens einer des ersten Einlasses (20) und des zweiten Einlasses (22) konfiguriert werden kann, um eine Flüssigkeit aufzunehmen;
einen Auslass (30), der konfiguriert ist, um die Flüssigkeit abzulassen;
eine erste Befestigung (40), die zum Befestigen der Filterbasis (12) in einer ersten Ausrichtung konfiguriert ist;
eine zweite Befestigung (50), die zum Befestigen der Filterbasis (12) in einer zweiten Ausrichtung konfiguriert ist, die sich von der ersten Ausrichtung unterscheidet; und
eine Öffnung, die für die Anbringung an einem Flüssigkeitsfiltergehäuse (14) konfiguriert ist
**dadurch gekennzeichnet, dass**
die zweite Richtung zu der ersten Richtung entgegengesetzt ist und die zweite Ausrichtung zu der ersten Ausrichtung entgegengesetzt ist.

6. Filterbasis (12) nach Anspruch 5, wobei die erste Befestigung (40) und die zweite Befestigung (50) gleich sind und auf entgegengesetzten Seiten der Filterbasis (12) eingerichtet sind.

7. Filterbasis (12) nach Anspruch 5, wobei jede der ersten Befestigung (40) und der zweiten Befestigung (50) gleich ist und eine Dreiergruppe von mit Innengewinden versehenen Vorsprüngen (42, 44, 46 und 52, 54, 56) umfasst, die zum Aufnehmen einer jeweiligen Dreiergruppe von mit Außengewinden versehenen Befestigungsschrauben konfiguriert sind.

8. Verfahren zum Installieren einer Filterbasis (12); die einen ersten Einlass (20), der in eine erste Richtung ausgerichtet ist, einen zweiten Einlass (22), der in eine zweite Richtung ausgerichtet ist, die sich von der ersten Richtung unterscheidet, wobei mindestens einer des ersten Einlasses (20) und des zweiten Einlasses (22) konfiguriert werden kann, um eine Flüssigkeit aufzunehmen, einen Auslass (30), der konfiguriert ist, um die Flüssigkeit abzulassen, eine erste Befestigung (40), die zum Befestigen der Filterbasis (12) in einer ersten Ausrichtung an einer Maschine konfiguriert ist, und eine zweite Befestigung (50) aufweist, die zum Befestigen der Filterbasis (12) in einer zweiten Ausrichtung, die sich von der ersten Ausrichtung unterscheidet, an einer Maschine konfiguriert ist, wobei die zweite Richtung zu der ersten Richtung entgegengesetzt ist und die zweite Ausrichtung zu der ersten Ausrichtung entgegengesetzt ist, das Verfahren umfassend:
Bestimmen einer gewünschten Richtung für die Ausrichtung des Auslasses (30); Auswählen eines des ersten Einlasses (20) und des zweiten Einlasses (22), um als ein bedienbarer Einlass zu dienen, basierend auf der gewünschten Richtung des Auslasses (30); und Befestigen der Filterbasis (12) an der Maschine entweder in der ersten Ausrichtung oder in der zweiten Ausrichtung unter Verwendung entweder der ersten Befestigung (40) beziehungsweise der zweiten Befestigung (50), derart, dass der Auslass (30) in die gewünschte Richtung ausgerichtet ist.

9. Verfahren nach Anspruch 8, ferner umfassend: Öffnen des bedienbaren Einlasses (20 oder 22) durch Entfernen oder Durchdringen eines Verschlusses davon.

10. Verfahren nach Anspruch 8, ferner umfassend: Verbinden eines Flüssigkeitsfiltergehäuses (14) mit der Filterbasis (12).

11. Verfahren nach Anspruch 8, ferner umfassend: Verbinden des bedienbaren Einlasses (20 oder 22) mit einer Flüssigkeitseinlassleitung; und Verbinden des Auslasses (30) mit einer Flüssigkeitsauslassleitung.

## Revendications

1. Ensemble filtre à fluide et pompe d'amorçage (10) comprenant : un boîtier de filtre à fluide (14) ; et
une base de filtre (12) attachée audit boîtier de filtre à fluide (14) et configurée pour déplacer le fluide à travers ledit boîtier de filtre à fluide (14), ladite base de filtre (12) comprenant :
une première entrée (20) orientée dans une première direction,
une seconde entrée (22) orientée dans une seconde direction différente de ladite première direction,
au moins l'une parmi ladite première entrée (20) et ladite seconde entrée (22) peut être configurée pour recevoir ledit fluide,
une sortie (30) configurée pour évacuer ledit fluide, une première monture (40) configurée pour monter ladite base de filtre (12) dans une première orientation, et
une seconde monture (50) configurée pour monter ladite base de filtre (12) dans une seconde orientation différente de ladite première orientation
**caractérisé en ce que**
ladite seconde direction est opposée à ladite première direction et ladite seconde orientation est opposée à ladite première orientation.

2. Ensemble filtre à fluide et pompe d'amorçage (10) selon la revendication 1 comprenant en outre un support (80) configuré pour s'engager avec l'une ou l'autre de ladite première monture (40) et de ladite seconde monture (50).

3. Ensemble filtre à fluide et pompe d'amorçage (10) selon la revendication 1 dans lequel la première monture (40) et ladite seconde monture (50) sont identiques et disposées sur des côtés opposés de ladite base de filtre (12).

4. Ensemble filtre à fluide et pompe d'amorçage (10) selon la revendication 1 dans lequel au moins l'une de ladite première monture (40) et de ladite seconde monture (50) comprend une pluralité de bossages à filetage interne (42, 44, 46 ou 52, 54, 56) configurés pour recevoir une pluralité respective de boulons de montage à filetage externe.

5. Base de filtre (12) comprenant :
une première entrée (20) orientée dans une première direction ;
une seconde entrée (22) orientée dans une seconde direction différente de la première direction ;
au moins l'une de ladite première entrée (20) et de ladite seconde entrée (22) peut être configurée pour recevoir un fluide ;
une sortie (30) configurée pour évacuer ledit fluide ;
une première monture (40) configurée pour monter ladite base de filtre (12) dans une première orientation ;
une seconde monture (50) configurée pour monter ladite base de filtre (12) dans une seconde orientation différente de ladite première orientation ; et
une ouverture configurée pour être attachée à un boîtier de filtre à fluide (14)
**caractérisé en ce que**
ladite seconde direction est opposée à ladite première direction et ladite seconde orientation est opposée à ladite première orientation.

6. Base de filtre (12) selon la revendication 5 dans laquelle ladite première monture (40) et ladite seconde monture (50) sont identiques et disposées sur des côtés opposés de ladite base de filtre (12).

7. Base de filtre (12) selon la revendication 5 dans laquelle chacune parmi ladite première monture (40) et ladite seconde monture (50) sont identiques et comprennent une triade de bossages à filetage interne (42, 44, 46 et 52, 54, 56) configurés pour recevoir une triade respective de boulons de montage à filetage externe.

8. Procédé d'installation d'une base de filtre (12) ayant une première entrée (20) orientée dans une première direction, une seconde entrée (22) orientée dans une seconde direction différente de ladite première direction, au moins l'une de ladite première entrée (20) et de ladite seconde entrée (22) étant configurable pour recevoir un fluide, une sortie (30) configurée pour évacuer ledit fluide, une première monture (40) configurée pour monter ladite base de filtre (12) sur une machine dans une première orientation, et une seconde monture (50) configurée pour monter ladite base de filtre (12) sur une machine dans une seconde orientation différente de ladite première orientation, dans lequel ladite seconde direction est opposée à ladite première direction et ladite seconde orientation est opposée à ladite première orientation, le procédé comprenant :
la détermination d'une direction souhaitée pour l'orientation de ladite sortie (30) ; la sélection d'une parmi ladite première entrée (20) et ladite seconde entrée (22) pour servir d'entrée opérationnelle sur la base de ladite direction souhaitée de ladite sortie (30) ; et le montage de ladite base de filtre (12) sur la machine dans ladite première orientation ou ladite seconde orientation à l'aide de ladite première monture (40) ou de ladite seconde monture (50), respectivement, de sorte que ladite sortie (30) soit orientée dans ladite direction souhaitée.

9. Procédé selon la revendication 8 comprenant en outre : l'ouverture de ladite entrée opérationnelle (20 ou 22) en retirant ou en pénétrant dans la fermeture de celle-ci.

10. Procédé selon la revendication 8 comprenant en outre : le raccordement d'un boîtier de filtre à fluide (14) à ladite base de filtre (12).

11. Procédé selon la revendication 8 comprenant en outre : le raccordement de ladite entrée opérationnelle (20 ou 22) à une conduite d'entrée de fluide ; et le raccordement de ladite sortie (30) à une conduite de sortie de fluide.
